# DEMANDE DE BREVET EUROPEEN

(11) **EP 2 296 131 A1**
(43) Date de publication de la demande: **16.03.2011**
(21) Numéro de dépôt: 10174254.2
(22) Date de dépôt: 27.08.2010
(51) Int. Cl.: G09B 29/00, G01C 21/32

(54) **Procédé et système de génération de cartes enrichies de lieux d'exploration**

(30) Priorité: 07.09.2009 FR 0956068
(71) Demandeur: Alcatel Lucent, 75007 Paris (FR)
(72) Inventeur: Robinson, Julien, 91620, Nozay (FR); Joly, Adrien, 91620, Nozay (FR)
(74) Mandataire: Raets, David

(57) **Abrégé**

Un système (S) est dédié à la génération de cartes enrichies (CL) de lieux d'exploration (L). Ce système (S) comprend i) une pluralité de moyens d'acquisition (C1-C6) différents propres à équiper au moins un explorateur (E2) et agencés pour collecter dans un lieu d'exploration (L) des données d'information relatives à ce dernier (L) ainsi qu'éventuellement à son contenu, ii) des moyens de transmission (MC) propres à équiper cet explorateur (E2) et agencés pour transmettre les données d'information collectées à un équipement choisi (S), et iii) des moyens de traitement (MT) implantés dans l'équipement choisi (S) et agencés pour générer une carte décrivant la configuration du lieu d'exploration (L) et extraire des informations sémantiques depuis au moins lesdites données d'information collectées et reçues, afin de les associer à au moins une zone de cette carte, de manière à constituer une carte enrichie (CL).

## Description

L'invention concerne le domaine de la génération de cartes de lieux enrichies.

Dans certaines activités, comme par exemple celui de l'exploration de lieux, il peut s'avérer (très) utile de disposer de cartes, dites enrichies, qui sont aussi précises que possible et auxquelles ont été associées des informations qui décrivent la configuration des lieux explorés ainsi qu'éventuellement une partie au moins du contenu de ces lieux explorés. Cela est encore plus utile dans des lieux où les environnements sont (fortement) contraints et/ou (très) dangereux, comme par exemple des lieux qui sont l'objet d'un incendie ou d'une fuite de gaz, ou dans des grottes (éventuellement sous-marines), ou dans des voies d'ascension en montagne, ou encore dans des lieux piégés.

Or, dans la plupart des situations les cartes sont (quasi) dépourvues d'enrichissements ou comportent des informations associées anciennes et/ou non pertinentes pour un explorateur, ou bien il n'existe pas de carte détaillant même grossièrement la configuration d'un lieu. Dans ces situations, lorsque plusieurs personnes (appelées explorateurs) doivent explorer un même lieu, elles sont contraintes de communiquer entre elles, afin de se transmettre des informations basiques qui sont indispensables à leur survie et/ou à la poursuite de leur exploration (ou intervention), voire même d'être attachées entre elles.

Les communications peuvent parfois se faire au moyen de dispositifs radio portatifs (comme par exemple des walkies-talkies), mais dans ce cas on ne sait pas toujours quel est l'explorateur qui parle et où il se trouve positionné, et lorsque les dispositifs radio portatifs sont inutilisables en raison des conditions rencontrées et/ou de consignes de sécurité, les communications doivent se faire oralement de proche en proche ce qui occasionne des pertes et/ou déformations d'informations, en particulier en environnement bruité, et donc peut conduire à des accidents parfois mortels.

L'invention a donc pour but d'améliorer la situation.

Elle propose à cet effet un procédé, dédié à la génération de cartes enrichies de lieux d'exploration, selon la revendication 1.

On notera que ce procédé peut être de type récursif ou itératif ou encore incrémental, chaque intervention d'un nouvel explorateur permettant de préciser, compléter, enrichir, affiner ou corriger la carte.

L'invention propose également un système, dédié à la génération de cartes enrichies de lieux d'exploration, selon la revendication 10.

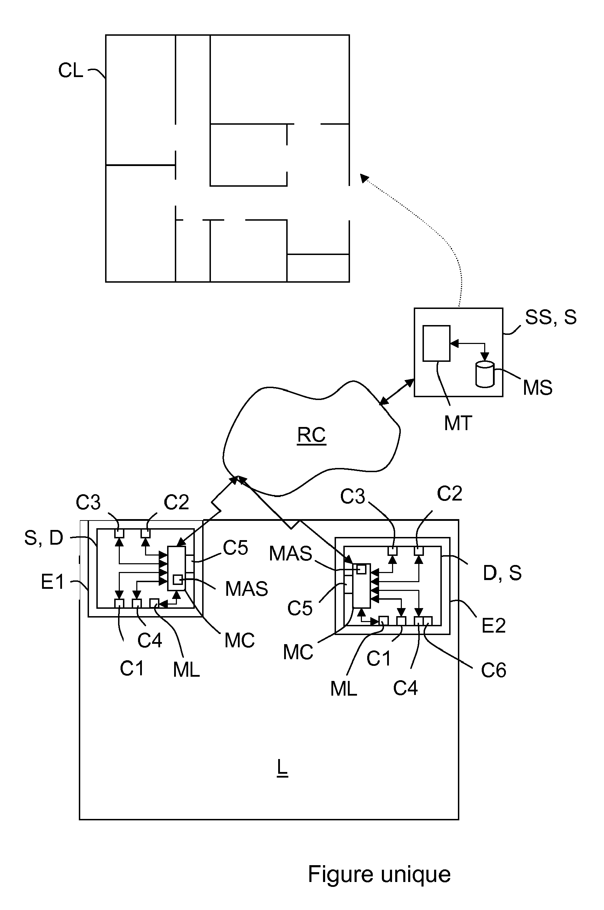

D'autres caractéristiques et avantages de l'invention apparaîtront à l'examen de la description détaillée ci-après, et du dessin annexé, sur lequel l'unique figure illustre de façon schématique et fonctionnelle un système de génération de cartes enrichies de lieux d'exploration selon un mode de réalisation de l'invention, comportant deux dispositifs embarqués équipant deux explorateurs de types différents et couplés à un réseau de communication non filaire.

Le dessin annexé pourra non seulement servir à compléter l'invention, mais aussi contribuer à sa définition, le cas échéant.

L'invention a pour objet d'offrir un procédé, et un système (S) correspondant, permettant de générer des cartes enrichies de lieux d'exploration, qui peuvent être éventuellement mises à jour dynamiquement afin de pouvoir être utilisées en temps réel.

A cet effet, l'invention propose notamment de mettre en oeuvre un procédé de génération de cartes (CL) de lieux d'exploration (L). Ce procédé peut par exemple être mis en oeuvre au moyen d'un système (S) selon l'invention, du type de celui qui est illustré non limitativement sur l'unique figure.

Comme illustré, un système S, selon l'invention, comprend des moyens d'acquisition Cj destinés à équiper au moins un explorateur Ei, des moyens de transmission MC destinés à équiper cet explorateur Ei et des moyens de traitement MT implantés dans un équipement choisi SS.

Il est important de noter qu'un explorateur Ei peut être soit un robot autonome ou télécommandé E1, soit une personne E2. Ici l'indice i prend les valeurs 1 et 2, mais il peut prendre n'importe quelle valeur au moins égale à un (1).

Par ailleurs, on notera que dans l'exemple non limitatif illustré, l'équipement choisi SS est un équipement de réseau, comme par exemple un serveur de services ou un serveur d'application(s) qui est connecté à un réseau de communication RC. Par conséquent, les moyens de traitement MT sont des moyens de communication qui sont agencés pour communiquer avec l'équipement choisi via (au moins) le réseau de communication RC. Mais, on pourrait envisager que l'équipement choisi SS soit accessible directement, par voie d'ondes ou par voie filaire, aux moyens de transmission MC qui équipent les différents explorateurs Ei (par exemple par des liaisons de type Bluetooth) et qui sont également des moyens de communication, ou bien soit transporté par chaque explorateur Ei et donc fonctionne de façon distribuée (et dans ce cas les moyens de transmission MC ne sont pas forcément des moyens de communication - ils peuvent être de simples câbles électriques ou un bus).

Le procédé selon l'invention comprend deux étapes principales.

Une première étape principale (i) consiste à collecter dans un lieu d'exploration L des données d'information relatives à ce dernier lieu L ainsi qu'éventuellement à son contenu avec des moyens d'acquisition Cj différents qui équipent au moins un explorateur Ei, et à transmettre ces données d'information collectées à l'équipement choisi SS.

Cette première étape principale (i) peut par exemple être mise en oeuvre par les moyens d'acquisition Cj et les moyens de transmission MC qui équipent chaque explorateur qui explore le lieu L. Plus précisément, les moyens d'acquisition Cj d'un explorateur collectent des données d'information dans le lieu d'exploration L, puis communiquent ces données d'information collectées aux moyens de transmission MC de leur explorateur Ei afin qu'il les transmette à l'équipement choisi SS.

Comme indiqué ci-avant, dans l'exemple non limitatif illustré, l'équipement choisi SS est un équipement de réseau distant, et par conséquent les moyens de transmission MC sont des moyens de communication qui sont capables d'établir des communications avec cet équipement choisi SS via (au moins) un réseau de communication RC. A titre d'exemple non limitatif, le réseau de communication RC est un réseau WiFi. Mais, il pourrait s'agir d'un réseau d'un autre type, filaire ou non filaire, comme par exemple un réseau Bluetooth ou un réseau mobile (ou cellulaire), par exemple de type GSM ou UMTS ou CDMA 2000 ou encore LTE (« Long Term Evolution »). On comprendra donc que dans ce qui suit les moyens de transmission MC sont des moyens de communication radio cellulaire. On notera que ces moyens de communication MC pourraient être des téléphones mobiles capables d'échanger des données, par voie filaire ou non filaire, avec les différents moyens d'acquisition Cj que transportent leurs explorateurs Ei respectifs. On notera également que l'explorateur Ei peut éventuellement disposer d'un équipement de transmission qui communique, par voie non filaire (par exemple Bluetooth) ou filaire, avec des moyens d'acquisition Cj, mais qui communique en WiFi (ou autre) avec les moyens chargés de créer (ou modifier) une carte (sur lesquels on reviendra plus loin), lesquels sont éventuellement déportés (par exemple dans un véhicule de contrôle à l'entrée du site exploré ou bien dans un local distant). Cela permet d'utiliser un protocole adapté aux communications courte portée (telles que Bluetooth) et un autre protocole adapté aux communications moyenne portée.

Les moyens d'acquisition Cj peuvent être de tout type dès lors qu'ils sont de types différents afin de collecter diverses données d'informations (ie. multi-modales), et dès lors qu'ils peuvent collecter des données d'information utiles à l'exploration d'un lieu L. Ainsi, ils peuvent être agencés pour déterminer au moins une valeur d'au moins une grandeur physique qui est représentative de condition(s) régnant dans un lieu d'exploration L et/ou de la configuration de ce lieu d'exploration L et/ou de la présence d'au moins un objet dans une zone de ce lieu d'exploration L et/ou de la vitesse de déplacement de l'explorateur Ei et/ou de l'accélération en cours de l'explorateur Ei et/ou de la direction (ou orientation) prise par l'explorateur Ei et/ou de la présence d'un danger. Autrement dit, les moyens d'acquisition Cj sont agencés afin de collecter des données d'information multi-modales.

Pour ce faire, les moyens d'acquisition Cj peuvent par exemple comprendre au moins un capteur agencé pour déterminer la valeur d'au moins une grandeur physique de condition choisie parmi au moins la température, le taux d'hygrométrie, le niveau d'intensité lumineuse, le taux d'au moins une substance et le niveau de radioactivité. Par exemple, lorsque l'exploration est effectuée par des pompiers E2 (ainsi qu'éventuellement par un robot E1) intervenant dans un appartement ou une maison en feu, on peut prévoir, comme illustré non limitativement, de les équiper d'un capteur de température C1, d'un capteur de niveau d'intensité lumineuse C2 et d'un capteur de taux de monoxyde de carbone C3.

On comprendra que le nombre de capteurs peut éventuellement varier d'une mission (d'exploration ou d'intervention) à une autre en fonction du type du lieu d'exploration L.

Ces moyens d'acquisition Cj peuvent également comprendre d'autres capteurs. Ainsi, ils peuvent comprendre un capteur destiné à déterminer le rythme cardiaque d'un explorateur Ei dont on sait qu'il peut être notamment représentatif de la présence d'un danger ou d'une découverte malheureuse (évènement négatif) ou encore d'une découverte heureuse (évènement positif). Ils peuvent également comprendre (en variante ou en complément (comme illustré non limitativement)) un capteur d'ambiance sonore C4, comme par exemple un microphone agencé pour enregistrer des sons présents dans le lieu d'exploration L. Ces sons peuvent être des bruits et/ou des phrases ou remarques, éventuellement prononcées volontairement pour effectuer un commentaire, et qui constituent des données d'information.

On notera que le microphone C4 peut être plus particulièrement destiné à enregistrer les mots qui sont prononcés par un explorateur E2 pendant son exploration, permettant ainsi de déterminer immédiatement de quel explorateur E2 il s'agit. Un tel microphone C4 peut être éventuellement couplé à un analyseur de langage capable d'analyser les sons enregistrés, éventuellement sémantiquement, afin de fournir des informations sémantiques, comme par exemple une marche, un produit toxique, ou un danger, qui sont ensuite envoyées aux moyens de génération de carte. Cela permet notamment d'économiser la bande passante.

Ces moyens d'acquisition Cj peuvent également, comme illustré non limitativement, comprendre au moins une caméra miniature C5 destinée à acquérir des images vidéo constituant des données d'information. Une telle caméra C5 peut par exemple être avantageusement intégrée dans un casque d'exploration, bien que cela ne soit pas obligatoire. Une telle caméra C5 peut être éventuellement couplée à un analyseur d'images, de manière à ne transmettre aux moyens de génération de carte que des fragments vidéo correspondant par exemple à des éléments ou objets recherchés et donc reconnus, éventuellement par le biais des techniques d'extraction sémantiques. Cela permet notamment d'économiser la bande passante.

On notera également que le système S peut éventuellement (et avantageusement) comprendre des moyens de localisation ML qui sont agencés de manière à déterminer l'endroit où se trouve situé leur explorateur Ei lorsqu'il collecte des données d'information.

Les moyens de localisation ML peuvent être de tout type connu de l'homme de l'art, dès lors qu'ils sont capable de déterminer avec une bonne précision, typiquement de l'ordre du mètre (ou de quelques mètres), la position géographique d'un explorateur Ei. Ainsi, il pourra par exemple s'agir de moyens de localisation par satellites (éventuellement de type GPS) ou bien de moyens de triangulation (calculant des positions à partir des données reçues de plusieurs points d'accès ou stations de base du réseau de communication RC). On notera que la localisation peut également se faire à partir de la connaissance du point de départ de l'explorateur Ei et des décalages effectués successivement par ce dernier (Ei) et calculés à partir de mesures accélérométriques. Cette technique peut être notamment utile quand aucune autre technique ne fonctionne, même si elle requiert des corrections pour éviter une accumulation d'erreurs. La localisation peut également se faire par analyse d'images, y compris en environnement inconnu.

Le système S comprend en outre des moyens d'association MAS agencés de manière à associer les données d'information collectées par les moyens d'acquisition Cj aux endroits déterminés où elles ont été collectées.

Comme illustré non limitativement, les moyens d'association MAS peuvent par exemple faire partie des moyens de transmission MC du fait que ces derniers (MC) reçoivent les données d'information qui ont été collectées par les moyens d'acquisition Cj et sont donc un bon endroit pour procéder à l'association d'une position (ou localisation) à chaque donnée d'information collectée avant qu'elle ne soit transmise à l'équipement choisi SS. Mais, les moyens d'association MAS pourraient être simplement couplés aux moyens de transmission MT (et donc externes à ces derniers (MC)).

Ces moyens d'association MAS sont de préférence agencés sous la forme de modules logiciels (ou informatiques). Mais, ils pourraient également se présenter sous la forme de circuits électroniques ou d'une combinaison de circuits électroniques et de modules logiciels.

On notera également que chaque explorateur peut être associé à un identifiant et donc les données d'information issues des moyens de transmission MC d'un explorateur Ei peuvent être associées à l'identifiant de cet explorateur Ei.

Une deuxième étape principale (ii) du procédé selon l'invention consiste à générer une carte qui décrit la configuration du lieu d'exploration L considéré et à associer à au moins une zone de cette carte des informations qui sont déduites ou extraites, par exemple depuis les moyens d'acquisitions (Cj) par une analyse sémantique, au moins des données d'information qui ont été collectées, afin de constituer une carte enrichie CL. On notera que dans l'exemple non limitatif illustré, la carte enrichie CL ne représente que la configuration du lieu d'exploration L (ici un appartement) sans les informations d'enrichissement associées.

Cette deuxième étape principale (ii) peut par exemple être mise en oeuvre par les moyens de traitement MT du système S, qui sont implantés dans l'équipement choisi SS.

Ces moyens de traitement MT sont de préférence agencés sous la forme de modules logiciels (ou informatiques). Mais, ils pourraient également se présenter sous la forme de circuits électroniques ou d'une combinaison de circuits électroniques et de modules logiciels.

Il est important de noter que la carte qui décrit la configuration d'un lieu d'exploration L peut être :
- soit inconnue au début d'une exploration, et dans ce cas elle doit être générée par les moyens de traitement MT à partir des informations de tous types déduites des données d'information et des éventuelles données de position associées reçues des moyens de transmission MC des explorateurs Ei,
- soit partiellement connue (et par exemple stockée dans les moyens de stockage MS), et dans ce cas elle peut être complétée, précisée, enrichie, affinée ou corrigée par les moyens de traitement MT à partir des informations de tous types déduites des données d'information et des éventuelles données de position associées reçues des moyens de transmission MC des explorateurs Ei.

Dans l'exemple non limitatif illustré, les moyens de stockage MS font partie de l'équipement choisi SS. Mais, cela n'est pas obligatoire. En effet, ils pourraient être localisés dans un autre équipement de réseau distant, accessible via (au moins) le réseau de communication RC. Cet équipement de réseau distant pourrait être, par exemple, un serveur de données cartographiques accessible via l'Internet.

Ces moyens de stockage MS peuvent se présenter sous n'importe quelle forme connue de l'homme de l'art, comme par exemple une mémoire (éventuellement purement logicielle) ou une base de données.

Comme indiqué ci-avant, les moyens de traitement MT peuvent être avantageusement agencés, en l'absence de carte ou en présence d'une carte partielle, pour déterminer au moins partiellement la configuration d'un lieu d'exploration L à partir des positions de chaque explorateur Ei utilisé dans ce lieu d'exploration L, par exemple déterminées au moyen de ses moyens de localisation ML embarqués, et pour générer une carte dudit lieu L à partir de cette configuration déterminée ainsi qu'éventuellement des données définissant la carte partielle disponible (et stockées dans les moyens de stockage MS).

Lorsque certaines données d'information reçues définissent des images vidéo acquises dans un lieu L, les moyens de traitement MT comprennent des moyens d'analyse vidéo qui sont chargés d'analyser ces données d'information vidéo afin d'en déduire certaines au moins des informations, informations avantageusement sémantiques, devant être associées à la carte générée. Ces moyens d'analyse vidéo peuvent par exemple être des moyens de reconnaissance de formes couplés à une base de données de formes ou des moyens de localisation (dans un lieu inconnu) par analyse du mouvement du paysage observé et/ou de murs observés. On notera que ces données d'information vidéo peuvent également et éventuellement être utilisées par les moyens de traitement MT pour déterminer au moins partiellement la configuration d'un lieu d'exploration L. Il en va de même de certaines informations représentatives de la configuration d'un lieu L, qui peuvent être déduites de données d'information constituant des mots (ou plus généralement des sons) prononcés par un explorateur E2 et enregistrés au moyen d'un microphone C4. On comprendra en effet que si un explorateur E2 décrit avec précision le lieu L qu'il explore, cette description peut permettre de déterminer au moins partiellement la configuration de ce lieu L. Dans ce cas, les moyens de traitement MT doivent disposer d'un analyseur de sons disposant d'une base de données de mots ainsi que de préférence de moyens d'analyse sémantique (syntaxique et grammaticale), afin de pouvoir comprendre la signification des phrases prononcées par les explorateurs E2 puis utiliser ce qu'ils ont compris pour déterminer au moins partiellement la configuration d'un lieu d'exploration L.

Comme indiqué précédemment, les images vidéo peuvent également permettre de déduire à chaque instant l'endroit où se trouve situé un explorateur Ei, que l'on dispose ou non de la configuration du lieu d'exploration L. En effet, des données de vitesse et/ou d'accélération et/ou d'orientation d'un explorateur Ei peuvent permettre de déduire l'endroit où il se trouve à chaque instant, ainsi qu'éventuellement des informations relatives à sa progression.

Par ailleurs, lorsque des données d'information collectées sont reçues associées respectivement à des positions géographiques ou à des endroits donnés, les moyens de traitement MT sont chargés d'associer à chaque zone de la carte qui correspond à ces positions géographiques ou à ces endroits donnés les informations qu'ils ont déduites au moins de ces données d'information collectées et reçues, afin de constituer la carte enrichie CL. On notera que certaines informations complémentaires, associées à des zones d'une carte, peuvent être extraites de moyens de stockage (éventuellement ceux référencés MS, bien que cela ne soit pas nécessaire).

Les cartes enrichies CL peuvent être stockées dans des moyens de stockage, par exemple ceux référencés MS. Elles peuvent ainsi être utilisées soit en direct, soit en différé. On notera que l'utilisation en direct peut par exemple permettre une mise à jour dynamique d'une carte enrichie CL (c'est-à-dire sensiblement en temps réel, au temps de traitement près).

Il est important de noter qu'au moins deux types d'utilisation d'une carte enrichie CL peuvent être envisagés. En effet, une carte enrichie CL peut être utilisée par un explorateur E2 qui doit explorer le lieu L correspondant. Dans ce cas, l'explorateur doit disposer de moyens d'affichage lui permettant d'afficher une carte enrichie CL, comme par exemple un afficheur à cristaux liquides ou à plasma d'un équipement portatif, ou une visière de casque à afficheur intégré, ou encore des lunettes comportant des verres à réalité augmentée, et/ou d'un casque audio (ou d'oreillettes) permettant de lui fournir (éventuellement de façon synthétique) des informations relatives à la carte et à sa progression (comme par exemple « tournez à droite dans 10 mètres » ou « attention gaz dangereux à droite » ou encore « forte pente dans 100 mètres »).

On peut également envisager que les moyens d'acquisitions (Cj) de localisation (tels que inertie, wifi, AGPS, etc.) se révèlent approximatifs, alors une indication sémantique de l'explorateur, par exemple humain, peut corriger cette erreur ("je tourne à droite", "je cours", "un escalier", etc...), par la capteur de voix vocale (C4).

Une carte enrichie CL peut être également utilisée par une personne qui se trouve située dans un poste de commandement (intérieur ou extérieur) pour déterminer des informations associées à une zone qu'explore ou que s'apprête à explorer un explorateur E2. Dans ce dernier cas, les informations peuvent être lues par la personne qui les a déterminées et transmises à l'explorateur E2, éventuellement via un réseau de communication. On comprendra que cela nécessite l'établissement d'une liaison de communication entre un terminal de communication utilisé par la personne située dans le poste de commandement et un terminal de communication transporté par l'explorateur E2 et couplé à des moyens de diffusion sonore. Les moyens de transmission MC embarqués par l'explorateur E2 peuvent éventuellement constituer son terminal de communication. Dans ce cas, les moyens de transmission MC peuvent être par exemple couplés à un ensemble (ou monture) comprenant à la fois un microphone C5 couplé à au moins un écouteur C6.

On notera également, comme illustré non limitativement, que les moyens d'acquisition Cj et les moyens de transmission MC, ainsi que les éventuels moyens de diffusion sonore C6, peuvent éventuellement faire partie d'un dispositif D qui est embarqué ou transporté par un explorateur Ei.

On notera également qu'en l'absence d'une carte ou en présence d'une carte partielle d'un lieu L, on peut utiliser un explorateur E1 de type robot pour générer une première carte enrichie CL de ce lieu L, puis on peut utiliser cette première carte enrichie CL pour guider et informer au moins un autre explorateur E2 (ici une personne), puis éventuellement améliorer l'enrichissement de la première carte enrichie CL avec les informations déduites des données d'information collectées par les moyens d'acquisition Cj de chaque autre explorateur E2. A titre d'exemple non limitatif, le premier explorateur E1 peut être un robot qui précède l'intervention de seconds explorateurs E2, comme par exemple des pompiers ou des spéléologues ou plus généralement tout type de secouriste.

On notera également que l'invention peut concerner de nombreux autres domaines que ceux cités précédemment, et notamment ceux de la randonnée (à pied, à ski ou en raquettes), de la navigation (dans un véhicule terrestre, aérien ou maritime), et des jeux (éventuellement interactifs).

L'invention ne se limite pas aux modes de réalisation de système de génération, de dispositif embarqué et de procédé de génération décrits ci-avant, seulement à titre d'exemple, mais elle englobe toutes les variantes que pourra envisager l'homme de l'art dans le cadre des revendications ci-après.

## Revendications

1. Procédé de génération de cartes enrichies de lieux d'exploration, **caractérisé en ce qu'**il comprend les étapes suivantes :
i) collecter dans un lieu d'exploration (L), par le biais d'une pluralité de moyens d'acquisition (Cj) différents équipant au moins un explorateur (Ei), des données d'information relatives à ce dernier (L) ainsi qu'éventuellement à son contenu, et transmettre ces données d'information collectées à un équipement choisi (SS), et
ii) générer une carte décrivant la configuration dudit lieu d'exploration (L), et associer à au moins une zone de ladite carte des informations sémantiques extraites depuis au moins lesdites données d'information collectées, de manière à constituer une carte enrichie.

2. Procédé selon la revendication 1, **caractérisé en ce qu'**à l'étape i) on détermine au moyen d'au moins un moyen d'acquisition (Cj) au moins une valeur d'au moins une grandeur physique représentative de condition(s) régnant dans ledit lieu d'exploration (L) et/ou de la configuration dudit lieu d'exploration (L) et/ou de la présence d'au moins un objet et/ou de la vitesse de déplacement dudit explorateur (Ei) et/ou de l'accélération en cours dudit explorateur (Ei) et/ou de la direction prise par ledit explorateur (Ei) et/ou de la présence d'un danger.

3. Procédé selon la revendication 2, **caractérisé en ce qu'**à l'étape i) on détermine la valeur d'au moins une grandeur physique de condition choisie dans un groupe comprenant au moins la température, le taux d'hygrométrie, le niveau d'intensité lumineuse, un taux d'au moins une substance et un niveau de radioactivité.

4. Procédé selon l'une des revendications 2 et 3, **caractérisé en ce qu'**à l'étape i) on détermine le rythme cardiaque dudit explorateur (Ei).

5. Procédé selon l'une des revendications 1 à 4, **caractérisé en ce qu'**à l'étape i) on enregistre des sons présents dans ledit lieu d'exploration (L), ces sons constituant des données d'information.

6. Procédé selon l'une des revendications 1 à 5, **caractérisé en ce qu'**à l'étape i) on détermine l'endroit où se trouve situé ledit explorateur (Ei) lorsqu'il collecte des données d'information de manière à associer ces dernières auxdits endroits déterminés, et à l'étape iii) on associe à chaque zone de la carte correspondant à un endroit déterminé les informations sémantiques extraites depuis au moins lesdites données d'information collectées et associées audit endroit déterminé, de manière à constituer ladite carte enrichie.

7. Procédé selon l'une des revendications 1 à 6, **caractérisé en ce qu'**à l'étape ii) on détermine au moins partiellement la configuration dudit lieu d'exploration (L) à partir de positions déterminées dudit explorateur (Ei), et on génère ladite carte à partir au moins de cette configuration déterminée.

8. Procédé selon l'une des revendications 1 à 7, **caractérisé en ce qu'**à l'étape ii) on déduit certaines au moins desdites informations sémantiques par analyse d'images vidéo collectées à l'étape i).

9. Procédé selon l'une des revendications 1 à 8, **caractérisé en ce qu'**à l'étape ii) on déduit certaines au moins desdites informations sémantiques par analyse sonore d'informations sonores collectées à l'étape i).

10. Système (S) de génération de cartes enrichies de lieux d'exploration, **caractérisé en ce qu'**il comprend :
i) une pluralité de moyens d'acquisition (Cj) différents propres à équiper au moins un explorateur (Ei) et agencés pour collecter dans un lieu d'exploration (L) des données d'information relatives à ce dernier (L) ainsi qu'éventuellement à son contenu,
ii) des moyens de transmission (MC) propres à équiper ledit explorateur (Ei) et agencés pour transmettre lesdites données d'information collectées à un équipement choisi (SS), et
iii) des moyens de traitement (MT) implantés dans ledit équipement choisi (SS) et agencés pour:
- générer une carte décrivant la configuration dudit lieu d'exploration (L), et
- extraire des informations sémantiques depuis au moins lesdites données d'information collectées et reçues, afin de les associer à au moins une zone de cette carte de manière à constituer une carte enrichie.

11. Système selon la revendication 10, **caractérisé en ce que** lesdits moyens d'acquisition (Cj) sont agencés pour déterminer au moins une valeur d'au moins une grandeur physique représentative de condition(s) régnant dans ledit lieu d'exploration (L) et/ou de la configuration dudit lieu d'exploration (L) et/ou de la présence d'au moins un objet et/ou de la vitesse de déplacement dudit explorateur (Ei) et/ou de l'accélération en cours dudit explorateur (Ei) et/ou de la direction prise par ledit explorateur (Ei) et/ou de la présence d'un danger.

12. Système selon la revendication 11, **caractérisé en ce que** lesdits moyens d'acquisition (Cj) comprennent au moins un capteur agencé pour déterminer la valeur d'au moins une grandeur physique de condition choisie dans un groupe comprenant au moins la température, le taux d'hygrométrie, le niveau d'intensité lumineuse, un taux d'au moins une substance et un niveau de radioactivité.

13. Système selon l'une des revendications 11 et 12, **caractérisé en ce que** lesdits moyens d'acquisition (Cj) comprennent un capteur agencé pour déterminer le rythme cardiaque dudit explorateur (Ei).

14. Système selon l'une des revendications 10 à 13, **caractérisé en ce que** lesdits moyens d'acquisition (Cj) comprennent un microphone agencé pour enregistrer des sons présents dans ledit lieu d'exploration (L), ces sons constituant des données d'information.

15. Système selon l'une des revendications 10 à 14, **caractérisé en ce qu'**il comprend des moyens de localisation (ML) agencés pour déterminer l'endroit où se trouve situé ledit explorateur (Ei) lorsqu'il collecte des données d'information, et des moyens d'association (MAS) agencés pour associer lesdites données d'information auxdits endroits déterminés correspondants, et **en ce que** lesdits moyens de traitement (MT) sont agencés pour associer à chaque zone de la carte correspondant à un endroit déterminé les informations sémantiques extraites depuis au moins lesdites données d'information collectées et associées audit endroit déterminé, de manière à constituer ladite carte enrichie.

16. Système selon l'une des revendications 10 à 15, **caractérisé en ce que** lesdits moyens de traitement (MT) sont agencés pour déterminer au moins partiellement la configuration dudit lieu d'exploration (L) à partir de positions déterminées dudit explorateur (Ei), et pour générer ladite carte à partir au moins de cette configuration déterminée.

17. Système selon l'une des revendications 10 à 16, **caractérisé en ce que** lesdits moyens d'acquisition (Cj) comprennent une caméra agencée pour acquérir des images vidéo constituant des données d'information, et **en ce que** lesdits moyens de traitement (MT) comprennent des moyens d'analyse vidéo agencés pour analyser lesdites données d'information définissant lesdites images vidéo acquises de manière à extraire certaines au moins desdites informations sémantiques à associer à ladite carte.

18. Système selon l'une des revendications 10 à 17, **caractérisé en ce que** lesdits moyens de transmission (MC) sont des moyens de communication filaire ou non filaire.

19. Système selon l'une des revendications 10 à 18, **caractérisé en ce qu'**il comprend ledit équipement choisi (SS).

## Revendications modifiées

### Revendications modifiées conformément à la règle 137(2) CBE.

**1.** Procédé de génération de cartes enrichies de lieux d'exploration, **caractérisé en ce qu'**il comprend les étapes suivantes:
i) collecter dans un lieu d'exploration (L), par le biais d'une pluralité de moyens d'acquisition (Cj) différents équipant au moins un explorateur (Ei), des données d'information relatives à ce dernier (L), dont au moins un enregistrement de sons présents dans ledit lieu d'exploration (L), ainsi qu'éventuellement à son contenu, et transmettre ces données d'information collectées à un équipement choisi (SS), et
ii) générer une carte décrivant la configuration dudit lieu d'exploration (L), et associer à au moins une zone de cette carte des informations déduites au moins desdites données d'information collectées, de manière à constituer une carte enrichie, dans lequel à l'étape ii) on déduit certaines au moins desdites informations par analyse sonore d'informations collectées à l'étape i).,

**2.** Procédé selon la revendication 1, **caractérisé en ce qu'**à l'étape i) on détermine au moyen d'au moins un moyen d'acquisition (Cj) au moins une valeur d'au moins une grandeur physique représentative de condition(s) régnant dans ledit lieu d'exploration (L) et/ou de la configuration dudit lieu d'exploration (L) et/ou de la présence d'au moins un objet et/ou de la vitesse de déplacement dudit explorateur (Ei) et/ou de l'accélération en cours dudit explorateur (Ei) et/ou de la direction prise par ledit explorateur (Ei) et/ou de la présence d'un danger,

**3.** Procédé selon la revendication 2, **caractérisé en ce qu'**à l'étape i) on détermine la valeur d'au moins une grandeur physique de condition choisie dans un groupe comprenant au moins la température, le taux d'hygrométrie, le niveau d'intensité lumineuse, un taux d'au moins une substance et un niveau de radioactivité,

**4.** Procédé selon l'une des revendications 2 et 3, **caractérisé en ce qu'**à l'étape i) on détermine le rythme cardiaque dudit explorateur (Ei).

**5.** Procédé selon l'une des revendications 1 à 4, **caractérisé en ce qu'**à l'étape i) on détermine l'endroit, où se trouve situé ledit explorateur (Ei) lorsqu'il collecte des données d'information de manière à associer ces dernières auxdits endroits déterminés, et l'étape ii) on associe à chaque zone de la carte correspondant à un endroit déterminé les informations déduites au moins desdites données d'information collectées et associées audit endroit déterminé, de manière à constituer ladite carte enrichie.

**6.** Procédé selon l'une des revendications 1 à 5, **caractérisé en ce qu'**à l'étape ii) on détermine au moins partiellement la configuration dudit lieu d'exploration (L) à partir de positions déterminées dudit explorateur (Ei), et on génère ladite carte à partir au moins de cette configuration déterminée.

**7.** Procédé selon l'une des revendications 1 à 6, **caractérisé en ce qu'**à l'étape ii) on déduit certaines au moins desdites informations par analyse d'images vidéo collectées à l'étape i).

**8.** Système (S) de génération de cartes enrichies de lieux d'exploration, **caractérisé en ce qu'**il comprend:
i) une pluralité de moyens d'acquisition (Cj) différents, dont au moins un microphone agencé pour enregistrer des sons présents dans ledit lieu d'exploration (L), propres à équiper au moins un explorateur (Ei) et agencés pour collecter dans un lieu d'exploration. (L) des données d'information relatives à ce dernier (L) ainsi qu'éventuellement à son contenu,
ii) des moyens de transmission (MC) propres à équiper ledit explorateur (Ei) et agencés pour transmettre lesdites données d'information collectées à un équipement choisi (SS), et
iii) des moyens de traitement (MT) implantés dans ledit équipement choisi (SS) et agencés pour:
- générer une carte décrivant la configuration dudit lieu d'exploration (L), et
- associer à au moins une zone de cette carte des informations déduites au moins desdites données d'information collectées et reçues, de manière à constituer une carte enrichie.

**9.** Système selon la revendication 8. **caractérisé en ce que** lesdits moyens d'acquisition (Cj) sont agencés pour déterminer au moins une valeur d'au moins une grandeur physique représentative de condition(s) régnant dans ledit lieu d'exploration (L) et/ou de la configuration dudit lieu d'exploration (L) et/ou de la présence d'au moins un objet et/ou de la vitesse de déplacement dudit explorateur (Ei) et/ou de l'accélération en cours dudit explorateur (Ei) et/ou de la direction prise par ledit explorateur (Ei) et/ou de la présence d'un danger.

**10.** Système selon la revendication 9, **caractérisé en ce que** lesdits moyens d'acquisition (Cj) comprennent au moins un capteur agencé pour déterminer la valeur d'au moins une grandeur physique de condition choisie dans un groupe comprenant au moins la température, le taux d'hygrométrie, le niveau d'intensité lumineuse, un taux d'au moins une substance et un niveau de radioactivité.

**11.** Système selon l'une des revendications 9 et 10, **caractérisé en ce que** lesdits moyens d'acquisition (Cj) comprennent un capteur agencé pour déterminer le rythme cardiaque dudit explorateur (Ei).

**12.** Système selon l'une des revendications 8 à 11, **caractérisé en ce qu'**il comprend des moyens de localisation (ML) agencés pour déterminer l'endroit où se trouve situé ledit explorateur (Ei) lorsqu'il collecte des données d'information, et des moyens d'association (MAS) agencés pour associer lesdites données d'information auxdits endroits déterminés correspondants, et **en ce que** lesdits moyens de traitement (MT) sont agencés pour associer à chaque zone de la carte correspondant a un endroit déterminé les informations déduites au moins desdites données d'information collectées et associées audit endroit déterminé, de manière à constituer ladite carte enrichie.

**13.** Système selon l'une des revendications 8 à 12, **caractérisé en ce que** lesdits moyens de traitement (MT) sont agencés pour déterminer au moins partiellement la configuration dudit lieu d'exploration (L) à partir de positions déterminées dudit explorateur (Ei), et pour générer ladite carte à partir au moins de cette configuration déterminée,

**14.** Système selon l'une des revendications 8 à 13, **caractérisé en ce que** lesdits moyens d'acquisition (Cj) comprennent une caméra agencée pour acquérir des images vidéo constituant des données d'information, et **en ce que** lesdits moyens de traitement (MT) comprennent des moyens d'analyse vidéo agencés pour analyser lesdites données d'information définissant lesdites images vidéo acquises de manière à déduire certaines au moins desdites informations à associer à ladite carte.

**15.** Système selon l'une des revendications 8 à 14, **caractérisé en ce que** lesdits moyens de transmission (MC) sont des moyens de communication filaire ou non filaire.

**16.** Système selon l'une des revendications 10 à 15, **caractérisé en ce qu'**il comprend ledit équipement choisi (SS).
